Europäisches Patentamt

European Patent Office

Office européen des brevets

(19)

(11) Veröffentlichungsnummer: **0 080 725**
**B1**

# (12) EUROPÄISCHE PATENTSCHRIFT

(45) Veröffentlichungstag der Patentschrift:
09.03.88

(21) Anmeldenummer: **82111015.2**

(22) Anmeldetag: **29.11.82**

(51) Int. Cl.⁴: **H 04 B 14/06, H 03 M 3/04**

(54) Verfahren und Anordnung zur A/D-Wandlung.

(30) Priorität: **30.11.81 DE 3147409**

(43) Veröffentlichungstag der Anmeldung:
**08.06.83 Patentblatt 83/23**

(45) Bekanntmachung des Hinweises auf die Patenterteilung:
**09.03.88 Patentblatt 88/10**

(84) Benannte Vertragsstaaten:
**AT DE FR GB IT**

(56) Entgegenhaltungen:
**US - A - 3 624 558**
**US - A - 3 925 731**

**NACHRICHTENTECHNISCHE ZEITSCHRIFT, Band 25, Nr. 4, April 1972, Seiten 179-186, Berlin, DE; R. LIPPMANN u.a.: "Nachrichtenreduktion für Raumfahrtexperimente"**
**ELECTRONIC DESIGN, Band 28, Nr. 2, Januar 1980, Seite 118, Rochelle Park, US; N.B. RAO: "Counter and DAC replace analog integrator in delta-modulation scheme"**
**ELECTRONIC ENGINEERING, Band 50, Nr. 602, Februar 1978, Seiten 17-19, London, GB; A.E. WHITTAKER: "Chopped complementary deltaverter"**

(73) Patentinhaber: **Siemens Aktiengesellschaft Berlin und München, Wittelsbacherplatz 2, D-8000 München 2 (DE)**

(72) Erfinder: **Giancarlo, Charles, McCulloch Fi-5 Soldiers Field, Boston Massachusetts 02163 (US)**

## Beschreibung

Die Erfindung betrifft ein Verfahren zur Analog/Digital-(A/D)-Wandlung, bei dem das analoge Eingangssignal integriert, verstärkt und anschliessend quantisiert wird und bei dem das quantisierte Signal zum Eingangssignal rückgekoppelt wird.

Entsprechende A/D-Wandler sollen trotz der Verwendung mit relativ geringer Genauigkeit hergestellter und relativ langsamer Komponenten ein hohes Signal/Rauschverhältnis aufweisen und in konventioneller Technologie herstellbar sein. Mögliche Anwendungen sind z.B. Codec-Filter für Telefoniezwecke und Kodierungsfilter zur Digitalisierung von Audio-Signalen für hochqualitative digitale Aufnahmen. Unter Digitalisierung wird die Zuordnung eines numerischen Codes zum Abtastwert einer analogen Wellenform, der zu ihrer Grösse proportional ist, verstanden.

A/D-Wandler können nach unterschiedlichen Methoden arbeiten, wobei die gebräuchlichsten Methoden in der Regel den Gebrauch von sehr genau arbeitenden Komponenten erfordern. Um die benötigte Genauigkeit für analoge Komponenten, die für den Wandlungsprozess benötigt werden, zu reduzieren, wird neuerdings die Delta-Modulations-Methode benutzt. Diese Delta-Modulations-Techniken erforderten jedoch sehr hohe Abtastraten. So ist aus K. Niwa, A. Yukawa, A. Tomozowa, «A Discretely Adaptive Delta Modulation Codec», IEEE Transactions on Communications, Vol. Com-29, No. 2, Feb. 1981, Seiten 168 bis 173 ein Delta-Modulations-Codec bekannt, das einen sogenannten Slope-Adaptive-Kreis im Rückkopplungskreis aufweist, der bewirkt, dass grossen Steigungen des Eingangssignals auch grosse Pegeländerungen des Quantisierungsausgangs (und umgekehrt) entsprechen. Dieser Codec erfordert jedoch zum Betrieb des Slope-Adaptive-Kreises eine sehr hohe Frequenz. Aufgrund der hohen Abtastfrequenz ist ferner die Adaption (Anpassung) quasikontinuierlich und kann daher nur relativ langsam auf einen stufenförmigen Eingangsimpuls antworten. Dieser Codec weist schliesslich eingangsseitig einen analogen Integrator und lediglich einen Komparator auf.

Aus T. Last, «Proportional Step Size Tracking Analog to Digital Converter», Rev. Sci. Instrum., 51 (3), Mar. 1980, Seiten 369 bis 374 ist ein A/D-Wandler bekannt, der ebenfalls einen Slope-Adaptive-Kreis aufweist, wobei dieser Kreis aus einem Quantisierer und einem Auf/Abwärtszähler gebildet ist. Da dieser Kreis jedoch keine Analogschaltung bzw. -funktion aufweist, wirkt er als einfacher A/D-Wandler, nicht als Delta-Modulator. Dieser Wandler führt ferner eingangsseitig ebenfalls keine Integration aus und weist daher ein hohes Quantisierungsrausch-Niveau auf. Fehler in einem Modulationszyklus werden nicht rückgekoppelt, um den akkumulierten Fehler im folgenden Zyklus zu reduzieren.

Aus F. de Jager, «Delta Modulation a Method of PCM Transmission Using the 1-Unit Code», Phillips Res. Rept., Vol. 7, Seiten 442 bis 466, 1952, ist eine Delta-Modulation bekannt, die einen Slope-Adaptive-Modulation-Kreis in Form eines analogen Integrators verwendet. Dieses System weist zwei analoge Integratoren auf, von denen einer im Eingangskreis angeordnet ist. Die Anwendung von zwei analogen Integratoren führt zu einer erheblichen Reduzierung der Toleranzen der analogen Komponenten und verursacht erhebliche Designprobleme bei der Schaffung eines stabilen Kreises und ist wirtschaftlich ungünstig.

Aus J.C. Candy, «A Use of Limit Cycle Oscillations to Obtain Robust Analog to Digital Converters», IEEE Trans. on Communications, Vol. COM-22, No. 3, Mar. 1974, Seiten 298 bis 305 und B.A. Wooley, I.L. Henry, «An Integrated Per-Channel PCM Encoder Based on Interpolation», IEEE Journal of Solid-State Circuits, Vol SC-14, No. 1, Feb. 1979, Seiten 14 bis 20, sind A/D-Wandler bekannt, bei denen durch Anordnung eines Integrations- und Verstärkungsgliedes im Eingangskreis die Abtastrate reduziert und das Signal/Rausch-Verhältnis erhöht wurde. Die Rückkopplung besteht jedoch aus einer direkten Rückführung der Quantisierung des Ausgangs des Integrations- und Verstärkungsgliedes, so dass die Anzahl möglicher digitaler Entsprechungen des Eingangssignals (Digital Estimates) auf die Anzahl der Quantisierungsniveaus des Quantisierers reduziert ist. Die Schaltung ist ferner nicht slope-adaptive.

Aufgabe der Erfindung ist es, hier Abhilfe zu schaffen und ein nach dem Delta-Modulations-Prinzip arbeitendes A/D-Wandler-Verfahren zu schaffen, das ein hohes Signal/Rausch-Verhältnis bei relativ geringen Abtastraten und bei hoher Genauigkeit liefert, erhebliche Streuungen der Werte seiner Komponenten ohne grössere Fehler im digitalen Ausgangssignal und ohne Instabilität des Kreises toleriert und somit einen grossen Stabilitätsbereich aufweise.

Diese Aufgabe wird bei einem Verfahren der eingangs genannten Art dadurch gelöst, dass das quantisierte Signal n (n > 1) Quantisierungsstufen aufweist und mittels einer periodischen Summenbildung digital integriert wird, dass das digital integrierte Signal N (N > n) Bits aufweist, in ein Analogsignal gewandelt und zum Eingangssignal rückgekoppelt wird und dass die Differenz aus dem Eingangssignal und dem rückgekoppelten Analogsignal analog integriert und verstärkt wird.

Eine Anordnung zur Durchführung des erfindungsgemässen Verfahrens ist vorteilhafterweise gekennzeichnet durch ein von einem aus analogem Eingangssignal und rückgekoppeltem Analogsignal gebildeten Differenzsignal beaufschlagtes analoges Integrations- und Verstärkungsglied, einen vom Integrations- und Verstärkungsglied beaufschlagten, n (n > 1) Quantisierungsstufen aufweisenden Quantisierer, ein vom Quantisierer beaufschlagtes digitales Summationsregister mit N (N > n) Bits und einen vom Summationsregister beaufschlagten, das rückgekoppelte Analogsignal abgebenden D/A-Wandler.

Ausgestaltungen der erfindungsgemässen Anordnung sind in Unteransprüchen gekennzeichnet. Mit Hilfe des erfindungsgemäss modifizierten Delta-Modulations-Kreises, der «slope-adaptive» arbeitet, einen Quantisierer und ein Summationsregister aufweist, gelingt es, die Genauigkeit der digitalen Entsprechung des Eingangssignals (Digital Estimate) zu verbessern. Der Slope-Adaptive-Kreis kann mit einem einzigen Takt betrieben werden und kann daher den gleichen Takt benutzen wie der gesamte Modulationskreis. Fehler im Quantisierer verursachen einen geringen Fehler im Wandler-Prozess, wenn die Quantisierungsniveaus in der Nähe eines optimalen Punktes gewählt werden.

Das Summationsregister ist aus herkömmlichen digitalen Schaltkreisen und daher einfach und wirtschaftlich günstig herstellbar. Das Integrations- und Verstärkungsglied ist mittels eines oder mehrerer herkömmlicher Operationsverstärker realisierbar. Zur Konvertierung der digitalen Entsprechung des Eingangssignals im Summationsregister zu einem analogen Wert vor der Rückkopplung zum Integrations- und Verstärkungsglied ist lediglich ein Digital/Analog (D/A)-Wandler mit geringem Genauigkeitsgrad notwendig. Das digitale Ausgangssignal kann entweder vom Summationsregister oder vom Ausgang des Quantisierers erhalten werden. Es kann in an sich bekannter Weise zur Qualitätsverbesserung mit digitalen Filtern weiterverarbeitet werden, es kann aber auch direkt weiterverarbeitet werden.

Der erfindungsgemässe Slope-Adaptive-Kreis erhöht die Genauigkeit der digitalen Entsprechung (Digital Estimate) des Eingangssignals und löst somit die Aufgabe, die Abtastrate im Vergleich zu den aus dem Stand der Technik bekannten Modulatoren zu verringern und einen bestimmten Signal/Rausch-Pegel zu gewährleisten. Der Slope-Adaptive-Kreis besteht in einfacher Weise aus einem nach dem Parallel-Verfahren arbeitenden A/D-Konverter («Flash»-A/D-Konverter) an sich bekannter Art, der den Ausgang des Integrations- und Verstärkungsgliedes quantisiert. Das Ausgangssignal dieses Quantisierers repräsentiert denn effektiv die Änderung des Eingangssignals seit der vorherigen Bewertung und somit dessen Steigung. Diese Information wird zum Summationsregister gegeben, um dessen Inhalt um die Grösse dieser Änderung zu modifizieren.

In einem für Telefoniezwecke anwendbaren Ausführungsbeispiel der Erfindung sind die Quantisierungsniveaus des Quantisierers kompandiert (kompressiert). Sie entsprechen z.B. binären Teilverhältnissen der Referenzspannung. Das digitale Summationsregister und der D/A-Konverter sind so ausgeführt, dass jede Registrierposition zu einem Spannungspegel des Quantisierers, der mit einem durch den Verstärkungsfaktor des Integrations- und Verstärkungsgliedes bestimmten Skalar multipliziert ist, korrespondiert (optimaler Punkt). Während jedes Zyklus wird eine binäre «1» zu einer einzelnen Bit-Position des Registers addiert oder subtrahiert, um dessen Inhalt zu modifizieren, wobei die Addition bzw. Subtraktion in an sich bekannter Weise durchgeführt werden kann.

In einem weiteren Ausführungsbeispiel der Erfindung wird ein linearer Quantisierer, ein Addierer und ein Register benutzt. Der Inhalt des Registers wird stets zu einem Eingang des Addierers rückgeführt. Der zweite Eingang des Addierers ist mit dem (kodierten) Ausgang des Quantisierers verbunden. Auf diese Weise wird der Registerinhalt bei jedem Zyklus durch den Ausgang des Quantisierers modifiziert.

Der Ausgang des Registers in beiden der oben genannten Ausführungsbeispiele wird zu einem Analogsignal gewandelt, wobei ein D/A-Wandler zur Anwendung kommt, der lediglich eine geringe Genauigkeit aufweisen muss. Es können z.B. D/A-Wandler mit Leiternetzwerk verwendet werden, wie sie z.B. aus U. Tietze, Ch. Schenk, Halbleiter-Schaltungstechnik, Springer-Verlag Berlin Heidelberg New York, 1980, Seiten 635 bis 638 bekannt sind. Dieses Ergebnis, d.h. die Ausgangssignale des D/A-Wandlers, werden schliesslich am Eingang des Integrier- und Verstärkungsgliedes vom analogen Eingangssignal subtrahiert. Der Slope-Adaptive-Kreis verbessert in dieser Weise die Genauigkeit jeder digitalen Entsprechung des Eingangssignals (Digital Estimate) und verbessert so das Signal/Rausch-Verhältnis. Aus diesem Grunde wird weniger «Oversampling» (Abtastfrequenz grösser als die doppelte zu verarbeitende Frequenz) und weniger anschliessendes digitales Filtern benötigt, um den gewünschten Signal/Rausch-Pegel zu erreichen.

Ein weiteres Problem, das durch die Erfindung gelöst wird, ist die Vergrösserung des stabilen Bereiches in einem Delta-Modulations-Kreis mit zweifachem Integrator, da Systeme mit zweifacher Integration nach dem Stand der Technik sehr geringe Stabilitätsgebiete aufweisen. Die vorliegende Erfindung modifiziert die Operationsgleichungen des Modulators durch Hinzufügung eines Stabilisierungsterms. Diese Stabilisierung resultiert aus der Tatsache, dass der Ausgang des Integrations- und Verstärkungsgliedes nicht kontinuierlich integriert, sondern eher abgetastet wird und nur an diskreten Zeitpunkten (bestimmt vom das Summationsregister beaufschlagenden Takt) summiert wird. Auf diese Weise wird der Modulatorkreis automatisch stabil.

Ein weiteres Problem, das die Erfindung löst, ist die langsame Antwort der meisten aus dem Stand der Technik bekannten Delta-Modulator-Systeme, die ein Integrations- und Verstärkungsglied im Eingangsteil bzw. in Vorwärtsrichtung verwenden. Da der Inhalt des Summationsregisters bei jedem Zyklus entsprechend dem Wert des höchsten Quantisierungsniveaus des Quantisierers – falls benötigt – geändert werden kann, tritt eine Beschränkung der Antwortgeschwindigkeit bei der vorliegenden Erfindung nicht auf.

Die Erfindung wird im folgenden anhand der Figuren näher erläutert. Es zeigen:

Fig. 1 ein Blockdiagramm eines Delta-Modulators mit einem Slope-Adaptive-Kreis,

Fig. 2 ein Schaltbild eines Ausführungsbeispiels eines im Diagramm der Fig. 1 benutzten Integrations- und Verstärkungsgliedes,

Fig. 3 ein Schaltbild eines Ausführungsbeispiels für einen im Diagramm der Fig. 1 verwendeten Quantisierer,

Fig. 4 ein Schaltbild eines Ausführungsbeispiels eines im Diagramm der Fig. 1 verwendeten digitalen Summationsregisters,

Fig. 5 ein Diagramm der Übertragungsfunktion eines erfindungsgemässen Wandlerkreises,

Fig. 6 ein Beispiel einer Signal/Rausch-Verhältnis-Kurve, die mit einem nach dem erfindungsgemässen Verfahren arbeitenden Wandler erreicht wird und

Fig. 7 ein Beispiel einer Verstärkungsfehler-Kurve bei einem nach dem erfindungsgemässen Verfahren arbeitenden Wandler.

In den Figuren sind gleiche Elemente mit gleichen Bezugszeichen versehen.

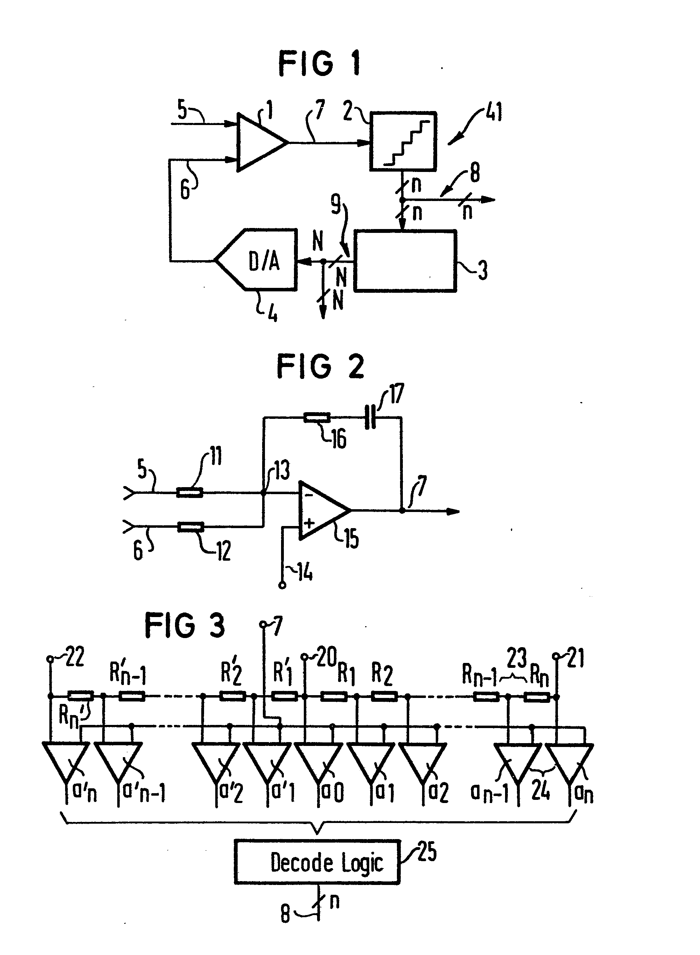

Die Fig. 1 zeigt ein Blockdiagramm eines Ausführungsbeispiels eines erfindungsgemässen A/D-Wandlers 41. Der Schaltkreis 1 realisiert die Summation von Integration und Verstärkung der Differenz von analogen Eingangssignal 5 und Entsprechung des Eingangssignals (Estimate) 6. Der Quantisierer 2 konvertiert das analoge Ausgangssignal des Schaltkreises 1 zu einem digitalen Signal 8 von n Bit Breite, wobei $n > 1$ und wobei die Auflösung des Quantisierers 2 geringer als die gewünschte Auflösung des A/D-Wandlers 41 ist. Das Summationsregister 3 führt eine Addition oder Subtraktion des Ausgangs 8 des Quantisierers 2 zum bzw. von seinem Inhalt durch. Der Digital/Analog-Wandler 4 konvertiert das digitale, vom Ausgang 9 des Summationsregisters 3 kommende digitale Wort zu einem analogen Wert, der dem Eingang 6 des Schaltkreises 1 zugeführt wird.

Die Anordnung nach Fig. 1 arbeitet in der Weise, dass das analoge Eingangssignal 5 zum invertierten Analogwert 6 der letzten digitalen Entsprechung (Digital Estimate) des Eingangssignales addiert wird. Das Differenzsignal wird kontinuierlich integriert und verstärkt. Die Werte des integrierten Differenzsignals und des verstärkten Differenzsignals werden addiert. Dieser Prozess kann in einfacher Weise mittels eines herkömmlichen Operationsverstärkers, der in einer üblichen Rückkopplungskonfiguration eine Serienschaltung eines Kondensators und eines Widerstandes aufweist, durchgeführt werden. Erfindungsgemäss wird die Zeitkonstante des Integrators so gewählt, dass sie maximal um 20% vom Abtastintervall, das im allgemeinen durch den das Summationsregister 3 beaufschlagenden Takt bestimmt wird, abweicht. Vorzugsweise entspricht die Zeitkonstante des Integrators dem Abtastintervall. Der Verstärkungsfaktor soll zwischen 1 und 2, vorzugsweise 1,2 bis 1,8 betragen, wobei der optimale Wert bei 1,5 liegt.

Ein Ausführungsbeispiel für die Realisation des Schaltkreises 1 der Fig. 1 ist in Fig. 2 gezeigt. Das analoge Eingangssignal 5 wird einem ersten Widerstand 11 zugeführt, während das invertierte «Estimate Signal» 6, das direkt vom D/A-Konverter 4 der Fig. 1 abgenommen wird, einem zweiten Widerstand 12 zugeführt wird. Die beiden Widerstände 11 und 12 weisen in etwa die gleiche Grösse auf und führen effektiv eine Addition der Ströme der Signale 5 und 6 aus. Am Verbindungspunkt 13, an dem die nicht von den Signalen 5 bzw. 6 beaufschlagten Enden der Widerstände 11 und 12 verbunden sind, liegt also ein Signal an, das die Summe des Eingangssignals 5 und des invertierten «Estimate Signals» 6 repräsentiert. Der Verbindungspunkt 13 ist gleichzeitig mit dem negativen Eingang eines Operationsverstärkers 15 verbunden. Der Positiveingang 14 des Operationsverstärkers 15 ist mit Masse verbunden. Der Eingang 14 kann aber auch mit einem automatischen Nullpunktabgleich verbunden sein, der eine Spannung vorsieht, die der Gleichstromkomponente des Signals 5 entspricht. Zwischen dem Ausgang 7 und dem Negativeingang 13 des Operationsverstärkers 15 ist eine Serienschaltung eines Rückkopplungswiderstandes 16 und eines Rückkopplungskondensators 17 angeordnet. Der Widerstand des Rückkopplungswiderstandes 16 ist um den Faktor 1 bis 2 grösser als der der Widerstände 11 und 12 und dient der Verstärkungsfunktion. Der Rückkopplungskondensator 17 formt die Integrationsfunktion, deren Zeitkonstante durch die Werte der Widerstände 16 und 11 oder 12 bestimmt wird. Das Ausgangssignal 7 des Operationsverstärkers 15 ist dann invertiert, es repräsentiert aber einen integrierten und verstärkten Wert des am Negativeingang 13 anliegenden Signals.

Das Integrations- und Verstärkungsglied 1 der Fig. 1 kann auch auf andere Weise ausgeführt sein. So ist es z.B. möglich, separate Kreise zum Integrieren und zum Verstärken vorzusehen, und die Ausgangssignale dieser separaten Kreise anschliessend zu addieren, um die gewünschte Integrations- und Verstärkungsfunktion zu erhalten.

Der integrierte und verstärkte Wert des Differenzsignals wird dann quantisiert zu einem aus n möglichen digitalen Werten. Dieser Wert ist eine ungefähre Messung der Änderung des Eingangssignals während der letzten Abtastperiode. Der Quantisierer 2 kann in beliebiger Weise ausgeführt sein. Aus Gründen der benötigten Geschwindigkeit wird vorzugsweise ein nach dem Parallel-Verfahren arbeitender Quantisierer 2 verwendet.

Es können z.B. $\frac{n-1}{2}$ Komparatoren verwendet werden, die mit unterschiedlichen positiven Spannungspegeln und mit «Null» als Referenzspannungen verbunden sind. In diesem Fall kann ein Absolutwertbildner benutzt werden, um den Eingang des Quantisierers immer positiv zu halten. Es ist auch möglich, den Quantisierer 2 in MOS-Technologie auszuführen und mittels einer Switched-Capacitor-Technik nur eine positive Spannung im Quantisierer zu benutzen und die Polarität des Eingangssignals oder der Referenzspannungen vor den Komparatoren in Abhängigkeit des Vorzeichens des Eingangssignals bzw. eines Vorzeichenkomparators zu ändern. Ein weiteres Ausführungsbeispiel ist der Gebrauch von n Komparatoren, deren Referenzspannungen sowohl positive als auch negative Pegel aufweisen.

Die Referenzspannungspegel im Quantisierer 2 müssen zu den Pegeln korrespondieren, die multipliziert mit einem Faktor $\beta$ dem Digital-Code des Quantisierers 2 entsprechen. Aus Stabilitätsgründen wird der Faktor $\beta$ durch die Verstärkung des Integrations- und Verstärkungsgliedes 1 mittels der Beziehung

$$\frac{A}{A-1} > \beta > \frac{A}{A+1} \, ,$$

mit: A: Verstärkungsfaktor des Integrations- und Verstärkungsgliedes 1,
$\beta$: reziproker Verstärkungsfaktor des Quantisierers 2, bestimmt. Bei A = 1,5 liegt der Optimalwert des reziproken Verstärkungsfaktor $\beta$ des Quantisierers 2 bei 1,5.

Die Fig. 3 zeigt das Schaltbild eines Ausführungsbeispiels einer möglichen Ausführung des Quantisierers 2. Es besteht aus Komparatoren 24 $a_0$–$a_n$ und $a'_1$ bis $a'_n$, Widerständen 23 $R_1$–$R_n$ und $R'_1$ bis $R'_n$, positiven und negativen Referenzspannungen 21 und 22 und einer Dekodierlogik 25. Die Komparatoren 24 und die die Referenzspannungen bildenden Widerstände 23 sind in bekannter Weise entsprechend dem Parallelverfahren in Serie geschaltet. In diesem Ausführungsbeispiel sind die Widerstände $R_i$ gleich den Widerständen $R'_i$ und die Komparatoren 24 identisch ausgeführt. Will man kompandierte Pegel realisieren, so können die Widerstände 23, z.B. in der Weise bemessen sein, dass $R_i = {}^1\!/_2 \, R_{i+1}$ beträgt.

Die Dekodierlogik 25 gibt dann den Wert einer binären «1» auf eine der n Ausgangsleitungen 8 und den Wert einer binären «Null» auf die übrigen Ausgangsleitungen 8 (oder einer kodierten Form davon), in Abhängigkeit des Pegels des Eingangssignals 7.

Die Dekodierlogik 25 kann als üblicher Prioritätsdekoder ausgeführt sein.

Ein weiteres Ausführungsbeispiel dimensioniert die Widerstände 23 so, dass $R_i = R_{i+1}$ beträgt, wobei ein linearer Quantisierer erhalten wird. Die Dekodierlogik 25 muss dann ein digitales Wort am Ausgang 8 erzeugen, das den Pegel des Eingangs 7 repräsentiert. Die Verbindungsleitung 20 in Fig. 3 ist mit Masse verbunden, der Komparator $a_0$ dient zur Ermittlung des Vorzeichens des am Punkt 7 anliegenden Signals. Schaltet man zwischen Eingang 7 und den Eingängen der Komparatoren $a_1$–$a_n$ einen Absolutwertbilder, so werden lediglich die Widerstände $R_1$ bis $R_n$, die Komparatoren $a_0$ bis $a_n$ und eine positive Referenzspannung 21 benötigt.

Weitere Möglichkeiten der Realisierung eines nach dem Parallelverfahren arbeitenden Quantisierers 2 sind beispielsweise aus «Elektronik», 1975, H. 11, Seiten 86 bis 87 oder aus U. Tietze, Ch. Schenk, Halbleiter-Schaltungstechnik, Springer-Verlag, Berlin Heidelberg New York, 1980, Seiten 649 bis 657 bekannt.

Der Ausgangscode des Quantisierers 2 beaufschlagt anschliessend das digitale Summationsregister 3.

Das Summationsregister 3 kann als Auf/Abwärtszähler, der den Zählvorgang an jeder Bitstelle beginnen kann, ausgeführt sein, wenn ein Quantisierer 2 mit binär gewichteten oder in anderer Weise kompandierten Quantisierungsniveaus verwendet wird. Wird ein Quantisierer 2 verwendet, dessen Quantisierungsniveau linear gewichtet sind, so wird vorteilhafterweise ein einen parallelen Volladdierer verwendendes Summationsregister 3 vorgesehen.

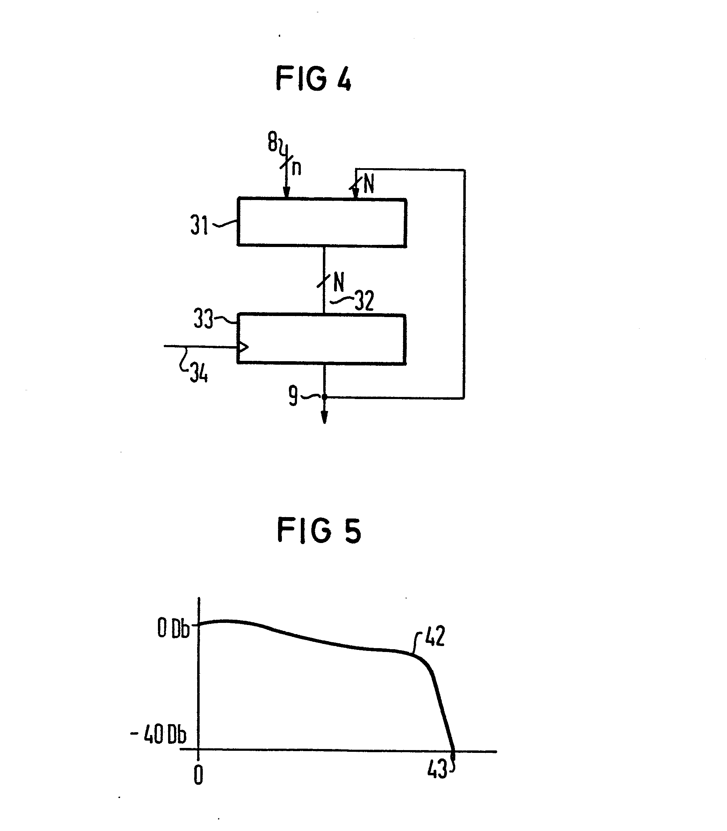

Das in der Fig. 4 gezeigte Blockdiagramm eines Ausführungsbeispiels eines Summationsregisters 3 besteht aus einem Volladdierer (Paralleladdierer) 31 und einem digitalen Register 33 mit einer Bitbreite von N, wobei N im allgemeinen gleich n + 2 oder n + 3 beträgt, mit n = Anzahl der Quantisierungsstufen des Quantisierers 2 bzw. der Ausgänge 8 des Quantisierers 2. Der Ausgang 9 des Registers 33 ist zu einem der Eingänge des Addierers 31 rückgeführt. Der andere Eingang des Addierers 31 ist mit dem Ausgang 8 der Dekodierlogik 25 der Fig. 3 verbunden. Der neue Wert für das Register 33 erscheint auf der den Ausgang des Addierers 31 mit dem Eingang des Registers 33 verbindenden N Bit breiten Leitung 32 und wird alle T Sekunden im Register 33 mittels des, das Register 33 beaufschlagenden Taktsignals 34 abgespeichert. T ist die Abtastzeit des gesamten Modulatorkreises, da, vom Register 33 abgesehen, alle weiteren Komponenten des Modulatorkreises nicht taktgesteuert sind. Die Werte im Register 33 können entweder in Vorzeichen-Betrags-Darstellung (Sign-Magnitude) oder im Zweier-Komplement-Code abgespeichert werden, in Abhängigkeit der Strukturen der Dekodierlogik 25 der Fig. 3, des Paralleladdierers 31 und des D/A-Konverters 4 der Fig. 1. Ferner ist es möglich, den Schaltkreis der Fig. 4 in Verbindung mit einem kompandierenden Quantisierer als modifizierten Aufwärts/Abwärts-Zähler auszuführen, wie beispielsweise aus T.A. Last, Rev. Sci. Instrum., 51(3), Mar. 1980, Seiten 369 bis 374 bekannt ist.

Das Summationsregister 3 speichert jeden neuen digitalen Entsprechungswert des Eingangssignals. Sein Inhalt wird zu einer analogen Spannung durch einen nur eine geringe Genauigkeit aufweisenden D/A-Konverter 4 gewandelt. Simulationen und Experimente haben gezeigt, dass ein 2-%-Fehler im D/A-Wandler 4 einen Verstärkungsfehler von weniger als 0,15 dB über einen Eingangsamplitudenbereich von 80 dB verursacht. Der analoge Ausgang 6 des D/A-Wandlers 4, der bei üblichen D/A-Wandlern bereits in invertierter Form vorliegt, wird vom Eingangssignal 4 subtrahiert und der Modulatorkreis somit vervollständigt.

Die weiterzuverarbeitende digitale Entsprechung des Eingangssignals kann direkt am Ausgang 9 des Registers 32, bzw. des Summationsregisters 3, abgenommen werden. Es ist aber auch möglich, diese digitale Entsprechung in einfacher aber kodierter Form am Ausgang 8 des Quantisierers 2 zu entnehmen. Beide Ausgänge können zur Verbesserung der Genauigkeit und zur Verringerung des Quantisierungsrauschens mittels digitaler Filter weiterverarbeitet werden. Die Filter können in herkömmlicher Form, beispielsweise in Transversal- und Rekursivform, hergestellt sein.

$$\left| \frac{V_{out}}{V_{in}} \right| = \frac{\omega \frac{T}{\pi}}{\sin \omega \frac{T}{\pi}} \sqrt{\frac{\left(\frac{R_{16}}{R_{11}} + \frac{1}{2}\right)^2 + \left(\frac{T}{2}\frac{R_{16}}{R_{11}}\omega - \frac{1}{\omega R_{11} C_{17}}\right)^2}{\left(\frac{R_{16}}{R_{11}} + \frac{1}{2}\right)^2 + \left(\frac{T}{2}\frac{R_{16}}{R_{11}}\omega - \frac{1}{\omega R_{11} C_{17}} + \frac{(\omega T)^2}{\pi\beta \sin \omega T}\right)^2}}$$

mit

| | | |
|---|---|---|
| $V_{out}$ | = | Ausgangsspannung |
| $V_{in}$ | = | Eingangsspannung |
| T | = | Abtastperiode |
| $R_{11}$, $R_{16}$, $C_{17}$ | = | Werte der Widerstände 11 und 16, bzw. des Kondensators 17 der Fig. 2, |
| $\beta$ | = | reziproker Verstärkungsfaktor des Quantisierers 2. |

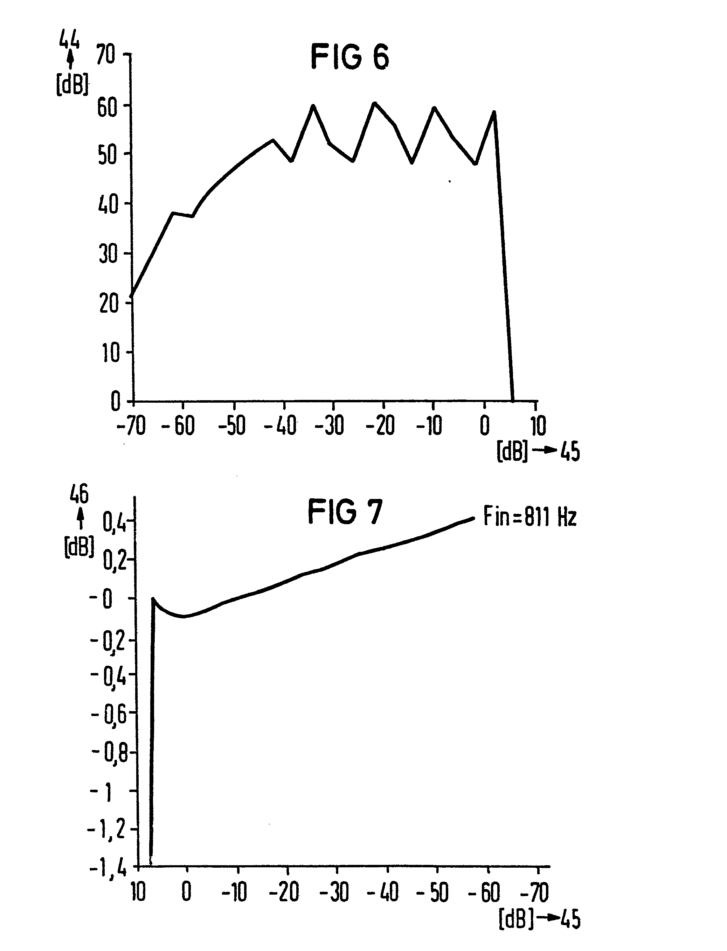

Die Fig. 5 zeigt eine typische Übertragungskurve 42 des Modulators 41. Die Kurve 42 zeigt eine geringe Verstärkung bei geringen Frequenzen und eine Null-Stelle bei der Abtastfrequenz 43.

Die Fig. 6 zeigt eine typische Signal/Rausch-Kurve 44 eines erfindungsgemäss ausgeführten A/D-Wandlers als Funktion der Eingangsamplitude 45, wobei der D/A-Wandler 41 2% Fehler aufweist und eine übliche digitale Filterung mit einem Down-Sampling-Filter auf 8 kH vorgenommen wurde. Diese Kurve betrifft einen Modulator mit einer Eingangsfrequenz von 811 Hz, einer Abtastfrequenz von 128 kHz, einer Vorwärtsverstärkung des Integrations- und Verstärkungsgliedes 1 von 1,5, einer Integrationszeitkonstante des Gliedes 1 von 8 µs, einem kompandierten Quantisierer mit insgesamt 17 Referenzspannungsniveaus (n = 8) und einem Verstärkungsfaktor von 0,7, wobei 3 dB in der Figur Vollaussteuerung entspricht.

Die Fig. 7 zeigt für das gleiche, die Fig. 6 betreffende Ausführungsbeispiel eine typische Verstärkungsfaktor-Fehler-Kurve 46 als Funktion der Eingangsamplitude 45.

In einem weiteren Ausführungsbeispiel für einen erfindungsgemässen A/D-Wandler betrug die Zeitkonstante des Integrations- und Verstärkungsgliedes 7,8 µs, seine Vorwärtsverstärkung 1,5, der Verstärkungsfaktor des Quantisierers 2 betrug 0,67, der Quantisierer 2 wies einen Vorzeichenkomparator und 8 bzw. 9 bipolare Komparatoren auf, deren Referenzspannungen binär gewichtet waren. Das Summationsregister 3 war 10 Bit bzw. 12 Bit und ein Vorzeichenbit breit, die Abtastrate betrug 128 kHz.

Allgemein ist es von Vorteil, die Zeitkonstante des Integrations- und Verstärkungsgliedes 1 im Bereich von $\pm$20% der Abtastrate T und die Verstärkung des Integrations- und Verstärkungsgliedes 1 im Bereich zwischen 1,2 und 1,8 zu wählen. Vorteilhafte Werte für den Verstärkungsfaktor 1/$\beta$ des Quantisierers 2 sind 0,5 bis 1, der Quantisierer 2 enthält vorteilhafterweise einen Vorzeichenkomparator, 7 bis 9 Komparatoren, deren Referenzspannungen binär gewichtet und bipolar (positiv oder negativ) sind, das Summationsregister 3 9 bis 13 Bits und ein Vorzeichenbit. Die Abtastfrequenz (1/T) kann z.B. im Bereich zwischen 100 kHz bis 2 MHz gewählt werden.

Der erfindungsgemässe A/D-Wandler, der als Modulationskreis mit einer zweifachen Integration gestaltet ist, wobei die erste Integration über die Differenz von Eingangssignal und «Estimate»-Signal durchgeführt wird und analog ist, während die zweite Integration digital ist und mittels periodischer Summation des digitalisierten Ausgangs des ersten analogen Integrators durchgeführt wird, kann auch als Sigma-Delta-Sigma-Modulator bezeichnet werden. Die Anzahl der möglichen digitalen Entsprechungen des Eingangssignals (Digital Estimate) der vorliegenden Erfindung beträgt in etwa $2^N$, wobei N > n um typischerweise 2 oder 3, da das Summationsregister 3 typischerweise 2 bis 3 Bit breiter ist als die Anzahl der Quantisierungsniveaus n. Dies verbessert die Signal/Rausch-Qualität eines erfindungsgemässen A/D-Wandlers erheblich im Vergleich zum Stand der Technik.

**Patentansprüche**

1. Verfahren zur A/D-Wandlung, bei dem das analoge Eingangssignal (5) integriert, verstärkt und anschliessend quantisiert wird und bei dem das quantisierte Signal zum Eingangssignal rückgekoppelt wird, dadurch gekennzeichnet, dass das quantisierte Signal (8) n (n > 1) Quantisierungsstufen aufweist und mittels einer periodischen Summenbildung digital integriert wird, dass das digital integrierte Signal (9) N (N > n) Bits aufweist, in ein Analogsignal (6) gewandelt und zum Eingangssignal (5) rückgekoppelt wird und dass die Differenz aus dem Eingangssignal (5) und dem rückgekoppelten Analogsignal (6) analog integriert und verstärkt wird.

2. Anordnung zur Durchführung des Verfahrens nach Anspruch 1, gekennzeichnet durch ein von einem aus analogem Eingangssignal (5) und rückgekoppeltem Analogsignal (6) gebildeten Differenzsignal beaufschlagtes analoges Integrations- und Verstärkungsglied (1), einen vom Integrations- und Verstärkungsglied (1) beaufschlagten, n (n > 1) Quantisierungsstufen aufweisenden Quantisierer (2), ein vom Quantisierer (2) beaufschlagtes digitales Summationsregister (3) mit N (N > n) Bits und einen vom Summationsregister (3) beaufschlagten, das rückgekoppelte Analogsignal (6) abgebenden D/A-Wandler (4).

3. Anordnung nach Anspruch 2, dadurch gekennzeichnet, dass der Quantisierer (2) als nach dem Parallelverfahren arbeitender Wandler ausgeführt ist.

4. Anordnung nach Anspruch 2 oder 3, dadurch gekennzeichnet, dass die Quantisierungsstufen des Quantisierers (2) kompandiert sind.

5. Anordnung nach einem der Ansprüche 2 bis 4, dadurch gekennzeichnet, dass die Quantisierungsstufen des Quantisierers (2) binär gewichtet sind.

6. Anordnung nach einem der Ansprüche 2 bis 5, dadurch gekennzeichnet, dass das Summationsregister (3) als Auf/Abwärts-Zähler ausgeführt ist.

7. Anordnung nach einem der Ansprüche 2 bis 6, dadurch gekennzeichnet, dass die Quantisierungsstufen des Quantisierers (2) linear gewichtet sind.

8. Anordnung nach einem der Ansprüche 2 bis 7, dadurch gekennzeichnet, dass das Summationsregister (3) mittels eines Volladdierers (31) realisiert ist.

9. Anordnung nach einem der Ansprüche 2 bis 8, dadurch gekennzeichnet, dass das Integrations- und Verstärkungsglied (1) als Operationsverstärker (15), der mittels einer aus einem Rückkopplungswiderstand (16) und einem Rückkopplungskondensator (17) gebildeten Serienschaltung rückgekoppelt ist, ausgeführt ist.

10. Anordnung nach einem der Ansprüche 2 bis 9, dadurch gekennzeichnet, dass die Zeitkonstante des Integrations- und Verstärkungsgliedes (1) im Bereich von $\pm 20\%$ der Abtastperiode T gewählt ist, dass der Verstärkungsfaktor des Integrations- und Verstärkungsgliedes (1) im Bereich zwischen 1,2 bis 1,8 gewählt ist, dass der Verstärkungsfaktor des Quantisierers (2) im Bereich zwischen 0,5 und 1 gewählt ist und dass die Abtastrate (1/T) im Bereich zwischen 100 kHz und 2 MHz gewählt ist.

11. Anordnung nach einem der Ansprüche 2 bis 10, dadurch gekennzeichnet, dass der Quantisierer (2) einen Vorzeichenkomparator ($a_0$) und 7 bis 9 bipolare Komparatoren (24) aufweist, deren Referenzspannungen binär gewichtet sind und dass das Summationsregister (3) eine Breite von 9 bis 13 Bits und ein Vorzeichenbit aufweist.

## Claims

1. A method of A/D-conversion, wherein the analogue input signal (5) is integrated, amplified and then quantised, and where the quantised signal is fed-back to the input signal, characterised in that the quantised signal (8) comprises n (n > 1) quantisation stages and is digitally integrated by a periodic sum formation, that the digitally integrated signal (9) comprises N (N > n) bits, is converted into an analogue signal (6), and is fed-back to the input signal (5), and that the difference between the input signal (5) and the fed-back analogue signal (6) is integrated in analogue fashion and is amplified.

2. An arrangement for carrying out the method claimed in claim 1, characterised by an analogue integration and amplification component (1) which is supplied with a difference signal formed by an analogue input signal (5) and a fed-back analogue signal (6), further characterised by a quantiser (2) which comprises of n (n > 1) quantisation stages and which is linked to the integration- and amplification component (1), by a digital addition register (3) with N (N > n) bits which is linked to the quantiser (2), and by a D/A-converter (4) which is linked to the addition register (3) and which emits the fed-back analogue signal (6).

3. An arrangement as claimed in claim 2, characterised in that the quantiser (2) is designed as a converter which operates in parallel fashion.

4. An arrangement as claimed in claim 2 or claim 3, characterised in that the quantisation stages of the quantiser (2) are companded.

5. An arrangement as claimed in one of the claims 2 to 4, characterised in that the quantisation stages of the quantiser (2) are weighted in binary fashion.

6. An arrangement as claimed in one of the claims 2 to 5, characterised in that the addition register (3) comprises an upwards/downwards counter.

7. An arrangement as claimed in one of the claims 2 to 6, characterised in that the quantisation stages of the quantiser (2) are weighted in linear fashion.

8. An arrangement as claimed in one of the claims 2 to 7, characterised in that the addition register (3) is formed by a full-adder (31).

9. An arrangement as claimed in one of the claims 2 to 8, characterised in that the integration- and amplification component (1) comprises an operational amplifier (15) which is fed-back by means of a series circuit comprising a feedback resistor (16) and a feedback capacitor (17).

10 An arrangement as claimed in one of the claims 2 to 9, characterised in that the time constant of the integration- and amplification component (1) is selected to lie within the region $\pm$ 20% of the sampling period T, that the amplification factor of the integration- and amplification component (1) is selected to lie within the range between 1.2 and 1.8, that the amplification factor of the quantiser (2) is selected to lie within the range between 0.5 and 1, and that the sampling rate (1/T) is selected to lie within the range between 100 kHz and 2 MHz.

11. An arrangement as claimed in one of the claims 2 to 10, characterised in that the quantiser (2) comprises a sign comparator ($a_0$) and 7 to 9 bipolar comparators (24), whose reference voltages are weighted in binary fashion, and that the addition register (3) has a width of 9 to 13 bits and one sign bit.

## Revendications

1. Procédé de conversion analogique/numérique, selon lequel le signal d'entrée analogique (5) est intégré, amplifié et ensuite quantifié et selon lequel le signal quantifié est appliqué par réaction au signal d'entrée, caractérisé par le fait que le signal quantifié (8) présente n (n > 1) étages de quantification et est intégré sous forme numérique au moyen d'une sommation périodique, que le signal intégré sous forme numérique (9) comporte N ($N > n$) bits, est converti en un signal analogique (6) et est appliqué par réaction au signal d'entrée (5), et que la différence entre le signal d'entrée (5) et le signal analogique (6) renvoyé par réaction est intégrée et amplifiée sous forme analogique.

2. Dispositif pour la mise en œuvre du procédé suivant la revendication 1, caractérisé par un circuit analogique d'intégration et d'amplification (1), chargé par un signal de différence formé à partir du signal d'entrée (5) et du signal analogique (6) renvoyé par réaction, un quantificateur (2) chargé par le circuit d'intégration et d'amplification (1) et comportant n ($n > 1$) étages de quantification, un registre numérique de sommation (3) chargé par le quantificateur (2) et comportant N ($N > n$) bits et un convertisseur numérique/analogique (4) chargé par le registre de sommation (3) et délivrant le signal analogique (6) renvoyé par réaction.

3. Dispositif suivant la revendication 2, caractérisé par le fait que le quantificateur (2) est réalisé sous la forme d'une convertisseur travaillant selon le procédé de traitement en parallèle.

4. Dispositif suivant la revendication 2 ou 3, caractérisé par le fait que les étages de quantification des quantificateurs (2) sont comprimés.

5. Dispositif suivant l'une des revendications 2 à 4, caractérisé par le fait que les étages de quantification des quantificateurs (2) sont pondérés de façon binaire.

6. Dispositif suivant l'une des revendications 2 à 5, caractérisé par le fait que le registre de sommation (3) est réalisé sous la forme d'un compteur progressif/régressif.

7. Dispositif suivant l'une des revendications 2 à 6, caractérisé par le fait que les étages de quantification du quantificateur (2) sont pondérés linéairement.

8. Dispositif suivant l'une des revendications 2 à 7, caractérisé par le fait que le registre de sommation (3) est réalisé au moyen d'un additionneur complet (31).

9. Dispositif suivant l'une des revendications 2 à 8, caractérisé par le fait que le circuit d'intégration et d'amplification (1) est réalisé sous la forme d'un amplificateur opérationnel (15), qui est couplé par réaction au moyen d'un circuit série formé par une résistance de réaction (16) et un condensateur de réaction (17).

10. Dispositif suivant l'une des revendications 2 à 9, caractérisé par le fait que la constante de temps du circuit d'intégration et d'amplification (1) est choisie dans une gamme de $\pm 20\%$ de la période d'échantillonage T, que le facteur d'amplification du circuit d'intégration et d'amplification (1) est choisi dans la gamme comprise entre 1,2 et 1,8, que le facteur d'amplification du quantificateur (2) est choisi dans la gamme comprise entre 0,5 et 1 et que la fréquence d'échantillonnage (1/T) est choisie dans la gamme comprise entre 100 kHz et 2 MHz.

11. Dispositif suivant l'une des revendications 2 à 10, caractérisé par le fait que le quantificateur (2) comporte un comparateur de signes ($a_0$) et 7 à 9 comparateurs bipolaires (24), dont les tensions de référence sont pondérées sous forme binaire, et que le registre de sommation (3) possède une largeur de 9 à 13 bits plus un bit de signe.

# FIG 1

# FIG 2

# FIG 3

Decode Logic

# FIG 4

# FIG 5

FIG 6

FIG 7

Fin=811 Hz